# EUROPEAN PATENT SPECIFICATION

(11) **EP 2 536 583 B1**
(45) Date of publication and mention of the grant of the patent: **24.09.2014**
(21) Application number: 11721354.6
(22) Date of filing: 17.02.2011
(51) Int. Cl.: B60K 6/365, B60K 6/48

(54) **INDUSTRIAL VEHICLE WITH A HYBRID DRIVE AND CONTINUOUS VARIABLE TRANSMISSION**
NUTZFAHRZEUG MIT EINEM HYBRIDANTRIEB UND EINEM STUFENLOSEN GETRIEBE
VEHICULE INDUSTRIEL A COMMANDE HYBRIDE ET TRANSMISSION A VARIATION CONTINUE

(30) Priority: 17.02.2010 IT TO20100118
(43) Date of publication of application: 26.12.2012
(73) Proprietor: Movimatica SRL, 12010 Cervasca (IT)
(72) Inventor: SOMA', Aurelio, I-12010 Cervasca (IT); BOSSO, Nicola, I-12010 Cervasca (IT); MERLO, Amilcare, I-12010 Cervasca (IT)
(74) Representative: Bergadano, Mirko
(86) International application number: PCT/IB2011/000298
(87) International publication number: WO 2011/101726

(56) References cited:
- US-A1- 2002 082 136
- US-A1- 2002 091 028
- US-A1- 2005 061 564

## Description

### TECHNICAL FIELD

The present invention relates to a drive for an industrial vehicle, such as construction or earthmoving machines, telescopic-arm lifting machines, fork-lift trucks or similar, and refuse disposal vehicles. In the following description and Claims, the term 'industrial vehicle' is intended to mean vehicles for other than passenger transport, and, more specifically, in which the power output is used not only to propel the vehicle but also to operate tools or operating systems, as on the vehicles referred to above.

### BACKGROUND ART

The need to reduce pollutant emissions produced by industrial vehicles is now a major issue.

Industrial vehicles are also used in rescue operations, to clear roads of debris or vehicle wreckage. And, when clearing roads inside a tunnel, in which fire is also involved, the oxygen inside the tunnel may not be sufficient for an internal combustion engine to function properly.

Patent Application US-A-2002091028 describes a series hybrid drive comprising an internal combustion engine in series with an electric generator and connected to a sun gear of an epicyclic gear train.

This configuration, however, is unsuitable for driving accessory equipment, such as a hydraulic pump, which could only be powered with the internal combustion engine drive shaft rotating, thus resulting in energy wastage.

A need is therefore felt for an industrial vehicle with a highly efficient system for driving the vehicle and operating an arm and/or mechanical shovel, and which can run without oxygen for at least a given time period.

US2005/0061564 discloses a parallel hybrid electric vehicle powertrain according to the preamble of claim 1 and a control method thereof. Such document is silent about layout implementation of the hybrid powertrain onto an industrial vehicle.

### DISCLOSURE OF INVENTION

According to the present invention, there is provided an industrial vehicle as claimed in Claim 1.

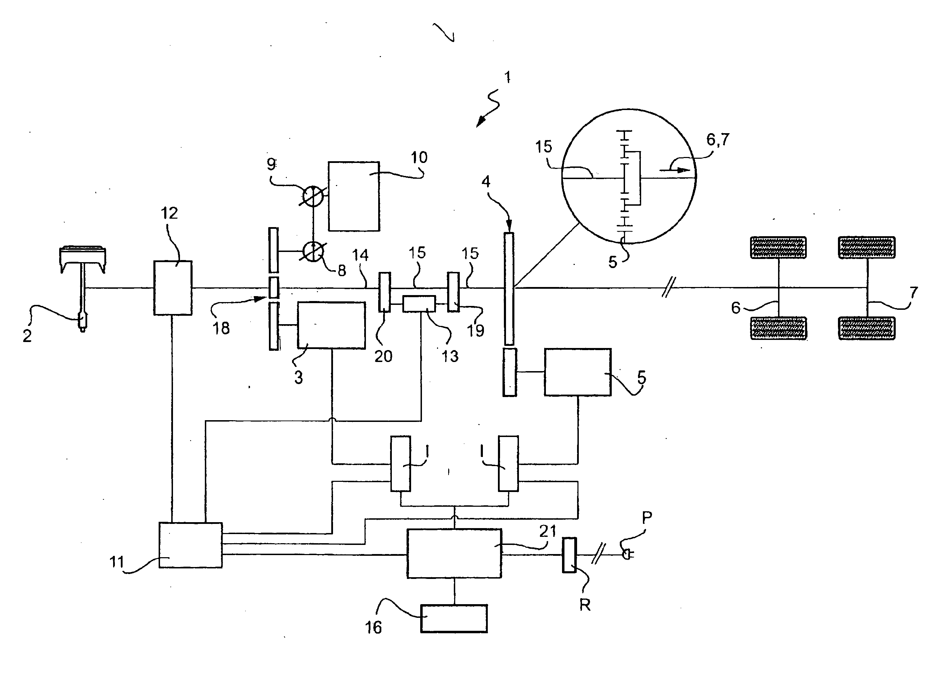

### BRIEF DESCRIPTION OF THE DRAWING

A non-limiting embodiment of the present invention will be described by way of example with reference to the attached drawing, which shows a schematic of the industrial vehicle drive according to the present invention.

### BEST MODE FOR CARRYING OUT THE INVENTION

Number 1 in the attached drawing indicates as a whole a drive for an industrial vehicle, such as an earthmoving vehicle equipped with a mechanical shovel, a tractor equipped with a power takeoff, or a vehicle with a telescopic arm.

Industrial vehicle drive 1 comprises an internal combustion engine 2; an electric generator 3 driven by internal combustion engine 2; an epicyclic gear train 4; an electric motor 5 connected to a ring gear of epicyclic gear train 4; and two, respectively front and rear, axles 6 and 7 controlled by epicyclic gear train 4 to drive the vehicle. Electric motor 5 is preferably a permanent-magnet synchronous motor, and is connected to electric actuators, preferably comprising an inverter I, for controlling its speed and/or supply.

The industrial vehicle drive also comprises a hydraulic circuit for operating a mechanical tool, such as a mechanical shovel and/or a telescopic arm and/or a forklift. The hydraulic circuit comprises a pump 8; and a linear or rotary actuator 9 controlled by pump 8 to operate, for example, a mechanical shovel 10. Pump 8 is driven by a drive 18 so that pump 8 is parallel to electric generator 3 with respect to internal combustion engine 2.

Drive 1 comprises a number of clutches for enabling different operating modes designed to reduce emissions and maintain desired performance, and which are controlled by a single control unit 11 as described below.

More specifically, drive 1 comprises a clutch 12 for disconnecting internal combustion engine 2 from electric generator 3, pump 8, and epicyclic gear train 4; and a synchronizer 13 for disconnecting electric generator 3 from electric motor 5.

More specifically, synchronizer 13 has an input shaft 14 and an output shaft 15, and serves to connect shafts 14 and 15 when both rotate at the same or at least comparable speed, i.e. operates at least as a clutch between input shaft 14 driven by internal combustion engine 2, and output shaft 15 connected to epicyclic gear train 4. The synchronizer advantageously comprises a relative angular speed sensor for measuring the relative angular speed of shafts 14 and 15; and an actuator controlled by the relative angular speed sensor. On measuring a relative speed below a given threshold, the sensor engages the clutch to connect internal combustion engine 2 to epicyclic gear train 4, even when electric motor 5 is drive-connected to axles 6 and 7.

In a preferred embodiment, input shaft 14 is connected to a sun gear of gear train 4. A carrier of gear train 4 is connected to front and rear axles 6, 7 by respective differentials (not shown). And front and rear axles 6, 7 may be connected mechanically to one another by a constant-speed drive, such as a double Hooke's joint.

Electric generator 3 and electric motor 5 are preferably connected to a battery pack 16 used when the vehicle is run with internal combustion engine 2 off. Battery pack 16 is advantageously connected to inverters I by an electronic power unit 21 for controlling charging of the battery pack.

In a preferred embodiment, drive 1 also comprises a brake 19 for selectively locking output shaft 15; and a second clutch 20 for selectively disconnecting synchronizer 13 from drive 18, and in particular from electric generator 3 and/or pump 8.

The industrial vehicle comprising drive 1 operates as follows.

Drive 1 is designed to enable longer low-speed running of the vehicle using electric motor 5, while internal combustion engine 2 takes no part in mechanically driving the vehicle, and operates in the best possible conditions to charge battery pack 16 by means of electric generator 3, and/or to run pump 8. When no power is drawn by pump 8 from internal combustion engine 2, this preferably runs at a constant angular speed corresponding to the best condition in which to charge battery pack 16.

More specifically, control unit 11 is programmed so that, when the vehicle is run at a speed below a given preset threshold, front and rear axles 6, 7 are driven by electric motor 5, and internal combustion engine 2 runs at constant speed to charge battery pack 16. In this operating mode, synchronizer 13 disconnects input shaft 14 from output shaft 15, and locks output shaft 15 using brake 19, so epicyclic gear train 4 operates in the same way as an ordinary gear train. To reverse the vehicle, the rotation direction of electric motor 5 is inverted. For example, if the vehicle is used on a construction site, electric motor 5 powers all on-site running of the vehicle, which is mostly limited to less than 10 km/h. When the vehicle is run by electric motor 5, electric power is supplied either by battery pack 16, or by a current outlet connected to a source, such as an electric mains. In the first case, the inverter is connected to control unit 11 to control the angular speed of electric motor 5; and, in the second case, the rectifier is connected to the current outlet to charge battery pack 16 with direct current.

When the vehicle is run at a speed above said given preset threshold, control unit 11 connects internal combustion engine 2 to output shaft 15 to assist electric motor 5 in driving the vehicle and/or operating mechanical shovel 10. In this case, the vehicle can be reversed using synchronizer 13, which inverts the rotation direction of input shaft 14 and output shaft 15, so the internal combustion engine also assists in reversing the vehicle. The above operating mode is used, for example, when running the vehicle off-site at a high enough cruising speed, e.g. 40 km/h, not to seriously inconvenience other traffic, and which can be reached by combining the power of and appropriately controlling internal combustion engine 2 and electric motor 5.

In a preferred embodiment of the present invention, electric motor 5 also intervenes when less than maximum vehicle running power is demanded, to permit control and optimize the efficiency of internal combustion engine 2.

Operation as described above is achieved by virtue of internal combustion engine 2 being connected to the sun gear, and axles 6, 7 to the carrier of epicyclic gear train 4. In fact, according to the Willis formula, the velocity ratio, i.e. the ratio between the angular speeds of the carrier and the sun gear, is less than 1 when the ring gear is locked, i.e. the carrier rotates slower than the sun gear when internal combustion engine 2 is drive-connected to axles 6 and 7, and electric motor 5 locks the ring gear of the epicyclic gear train.

Moreover, electric motor 5 is connected to the ring gear so that the maximum output of electric motor 5 is less than the total maximum output transferable to axles 6 and 7. In other words, when maximum power is demanded of the vehicle, the output of internal combustion engine 2 is added to that of electric motor 5, and the absolute sum of both is transferred to axles 6, 7.

In a preferred embodiment, drive 1 comprises a speed sensor for determining the rotation speed of an output shaft of electric motor 5. The instantaneous power drawn from electric motor 5 is roughly calculated as the sensor-measured speed multiplied by the maximum torque of electric motor 5; the latter being a constant value memorized in control unit 11. Control unit 11 is therefore programmed to compare user power demand on the accelerator pedal with the power calculated as the product of the angular speed and maximum torque of electric motor 5. If user power demand exceeds the maximum power of electric motor 5, control unit 11 commands parallel connection of internal combustion engine 2. Conversely, if user power demand is less than the maximum power of electric motor 5, the vehicle is driven solely by electric motor 5.

To operate front and rear axles 6, 7 with internal combustion engine 2 off, clutch 12 or synchronizer 13 is released and input shaft 14 is locked; in which case, reversing of the vehicle is controlled by electric motor 5.

To operate mechanical shovel 10 with internal combustion engine 2 off, clutch 12 is also released, and synchronizer 13 is controlled by control unit 11 to distribute power between output shaft 15 and pump 8.

The advantages of an industrial vehicle comprising a drive in accordance with the present invention are as follows.

By disconnecting internal combustion engine 2 from axles 6 and 7, clutch 12 permits all-electric drive of pump 8 and actuator 9. Industrial vehicles operating this way have major advantages when operating in low-oxygen conditions or on urban construction sites where minimizing exhaust gas pollution is an issue. The epicyclic gear train 4 combination permits highly versatile power management in the various branches of the parallel connection to pump 8 and generator 3, while at the same time easily achieving the low-speed range normally demanded by industrial vehicles, as explained in more detail below.

The connection system claimed provides for improved design of the internal combustion engine and electric motor in terms of available vehicle drive power. That is, only when maximum power is demanded, does the connection sum the outputs of the internal combustion engine and electric motor, and so easily divide the maximum design power demand between the two.

The term 'available vehicle drive power' is intended to mean the output of the internal combustion engine and electric motor minus the power needed to drive any accessory equipment connected to the internal combustion engine or electric motor, such as a vehicle air conditioning system compressor. When all the accessory equipment is off, the maximum output of the epicyclic gear train 4 carrier equals the sum of the absolute maximum output of the internal combustion engine and electric motor, less any friction.

Industrial vehicles are mostly run at low speed. Electric motor 5 is designed to cater to most applications and to a wide range of manoeuvres; so internal combustion engine 2 is run in high-efficiency conditions, to reduce pollutant emissions and at the same time increase vehicle running time with respect to all-electric operation. In all-electric mode, according to the type of connection between epicyclic gear train 4, internal combustion engine 2, and electric motor 5, electric motor 5 can easily be operated with the reduction ratio defined by epicyclic gear train 4 when the sun gear is locked, preferably by brake 19.

Epicyclic gear train 4 permits engagement of internal combustion engine 2 when user power demand exceeds output of the electric motor. The industrial vehicle thus has a hybrid electromechanical drive which, controlled, amounts to a continuous variable transmission (CVT).

Given the connection scheme of internal combustion engine 2, electric motor 5, and the epicyclic gear train, electric motor 5 may be designed to power ordinary on-site running of the vehicle, and so be particularly compact and inexpensive.

Internal combustion engine 2 may be controlled to remain in the optimum operating condition range as long as possible, to reduce acoustic emissions.

Drive 1 is easy to produce and control, and is especially suitable for small-medium-sized vehicles, which can be produced cheaper while at the same time benefiting from the advantages of a hybrid drive. Moreover, drive 1 is installed upstream from the axles, and so does not affect current differential solutions, and may also be installed on vehicles with only one drive axle.

When manoeuvring approximately at zero speed between reverse and forward gears, the vehicle is driven electrically below a given speed threshold, with no engagement interruptions. Clutch 20 is used to engage internal combustion engine 2 at the correct speed, and, in one embodiment, is designed to only parallel-connect internal combustion engine 2 and electric motor 5 to move forward when power demand is above a given threshold. To reverse, the vehicle is driven solely by electric motor 5.

Clearly, changes may be made to the drive as described and illustrated herein without, however, departing from the protective scope as defined in the accompanying Claims.

For example, electric generator 3 and/or electric motor 5 may be reversible electric machines, to further improve the efficiency of the vehicle.

Reversible electric machine 3 in fact may be used to run pump 8 when clutch 12 is released, thus simplifying the internal design of synchronizer 13.

Reversible electric machine 5 may act as a generator when braking the vehicle, to further charge battery pack 16.

Battery pack 16 may be eliminated; in which case, generator 3 supplies electric motor 5, and internal combustion engine 2 cannot be turned off when electric motor 5 is running.

In the description and Claims, the term 'connected' is to be inferred in its widest sense, i.e. of also comprising intermediate elements for modifying/improving the velocity ratio or commanding rotational engagement/disengagement. The term 'permanently connected', on the other hand, refers to elements being so connected that power is always transferred when the drive is running.

Clutch 20 may be replaced with a more complex drive designed to selectively invert rotation between its input and output, and so also permit parallel connection of internal combustion engine 2 and electric motor 5 when reversing, when power demand exceeds a given threshold.

The terms 'motor' and 'generator' are also intended in the functional as opposed to structural sense. In fact, a reversible electric machine is both a motor and generator.

A current outlet P may also be connected to a rectifier R; in which case, the rectifier R is connected to battery pack 16 and/or power unit 21 to control inverters I.

## Claims

1. An industrial vehicle comprising an internal combustion engine (2); an electric motor (5); a reversible electric machine (3); at least one drive axle (6; 7); and an epicyclic gear train (4) connected to said internal combustion engine (2), said electric motor (5), and said at least one drive axle (6; 7); wherein said electric motor (5) drives a ring gear of said epicyclic gear train, and said at least one drive axle (6; 7) is driven by a carrier of said epicyclic gear train; the vehicle being **characterized in that** said internal combustion engine (2) drives said reversible electric machine (3) and a sun gear of said epicyclic gear train in parallel, so that the maximum power transferred to said at least one drive axle (6; 7) is the sum of the absolute maximum vehicle driving power of said internal combustion engine (2) and said electric motor (5); and by comprising a first clutch (12) for disconnecting said internal combustion engine (2) from said sun gear; a hydraulic pump (8); and at least one hydraulic actuator (9) connected to said hydraulic pump (8); said hydraulic pump (8) being power-transfer-connected to said sun gear in parallel with respect to said first clutch (12).

2. A vehicle as claimed in Claim 1, **characterized by** comprising a synchronizer (13) for connecting said sun gear to said internal combustion engine (2) while the internal combustion engine (2) is running; and a brake (19) for locking said sun gear.

3. A vehicle as claimed in Claim 2, **characterized in that** said synchronizer (13) is designed to connect a first shaft (14), from said first clutch (12), to a second shaft (15), connected to said sun gear, when the angular speeds of said first and second shaft (14, 15) are substantially the same.

4. A vehicle as claimed in any one of the foregoing Claims, **characterized by** comprising a second clutch (20) for disconnecting said hydraulic pump (8) from said sun gear.

5. A vehicle as claimed in any one of Claims 2 to 4, **characterized by** comprising a control unit (11) for commanding drive of said vehicle by said electric motor (5), and for commanding connection of said epicyclic gear train (4) to said internal combustion engine (2) by said synchronizer (13) when user power and/or speed demand exceeds a given preset threshold.

6. A vehicle as claimed in any one of the foregoing Claims, **characterized in that** said electric motor (5) is also a reversible electric machine.

7. A vehicle as claimed in any one of the foregoing Claims, **characterized by** comprising an electric power battery (16) connected functionally to the actuators (I) of said electric motor (5) and said reversible electric machine (3).

8. A vehicle as claimed in one of the foregoing Claims, **characterized by** comprising a power control unit (21) for controlling charging of the electric power battery (16).

9. A vehicle as claimed in one of the foregoing Claims, **characterized by** comprising a power supply (P) comprising an external current outlet for supplying power to at least said electric motor (5) from an external electric power source.

## Patentansprüche

1. Nutzfahrzeug, umfassend einen Verbrennungsmotor (2); einen Elektromotor (5); eine umkehrbare elektrische Maschine (3); mindestens eine Antriebsachse (6; 7); und ein Planetengetriebe (4), das mit dem Verbrennungsmotor (2), dem Elektromotor (5) und der mindesten einen Antriebsachse (6; 7) verbunden ist; wobei der Elektromotor (5) ein Hohlrad des Planetengetriebes antreibt, und die mindestens eine Antriebsachse (6; 7) von einem Träger des Planetengetriebes angetrieben wird; wobei das Fahrzeug **dadurch gekennzeichnet ist, dass** der Verbrennungsmotor (2) die umkehrbare elektrische Maschine (3) und ein Sonnenrad des Planetengetriebes parallel antreibt, so dass die maximale Leistung, die auf die mindestens eine Antriebsachse (6; 7) übertragen wird, die Summe der absoluten maximalen Fahrzeugantriebsleistung des Verbrennungsmotors (2) und des Elektromotors (5) ist; und dadurch, dass sie Folgendes umfasst: eine erste Kupplung (12) zum Trennen des Verbrennungsmotors (2) von dem Sonnenrad; eine hydraulische Pumpe (8); und mindestens ein hydraulisches Stellglied (9), das mit der hydraulischen Pumpe (8) verbunden ist; wobei die hydraulische Pumpe (8) parallel in Bezug auf die erste Kupplung (12) in einer Leistungsübertragungsverbindung mit dem Sonnenrad steht.

2. Fahrzeug nach Anspruch 1, **dadurch gekennzeichnet, dass** es Folgendes umfasst: eine Synchronisiereinrichtung (13) zum Verbinden des Sonnenrads mit dem Verbrennungsmotor (2) während der Verbrennungsmotor (2) läuft; und eine Bremse (19) zum Feststellen des Sonnenrads.

3. Fahrzeug nach Anspruch 2, **dadurch gekennzeichnet, dass** die Synchronisiereinrichtung (13) ausgestaltet ist, eine erste Welle (14) von der ersten Kupplung (12) mit einer zweiten Welle (15), die mit dem Sonnenrad verbunden ist, zu verbinden, wenn die Winkelgeschwindigkeiten der ersten und zweiten Welle (14, 15) im Wesentlichen gleich sind.

4. Fahrzeug nach einem der vorhergehenden Ansprüche, **dadurch gekennzeichnet, dass** es eine zweite Kupplung (20) umfasst, um die hydraulischen Pumpe (8) von dem Sonnenrad zu trennen.

5. Fahrzeug nach einem der Ansprüche 2 bis 4, **dadurch gekennzeichnet, dass** es eine Steuereinheit (11) zum Veranlassen des Antriebs des Fahrzeugs durch den Elektromotor (5) und zum Veranlassen der Verbindung des Planetengetriebes (4) mit dem Verbrennungsmotor (2) durch die Synchronisiereinrichtung (13) umfasst, wenn die Anforderung des Benutzers an Leistung und/oder Geschwindigkeit eine bestimmte vorgegebene Grenze überschreitet.

6. Fahrzeug nach einem der vorhergehenden Ansprüche, **dadurch gekennzeichnet, dass** der Elektromotor (5) auch eine umkehrbare elektrische Maschine ist.

7. Fahrzeug nach einem der vorhergehenden Ansprüche, **dadurch gekennzeichnet, dass** es eine elektrische Batterie (16) umfasst, die funktional mit den Stellgliedern (I) des Elektromotors (5) und der umkehrbaren elektrischen Maschine (3) verbunden ist.

8. Fahrzeug nach einem der vorhergehenden Ansprüche, **dadurch gekennzeichnet, dass** es ein Leistungssteuergerät (21) zum Steuern des Aufladens der elektrischen Batterie (16) umfasst.

9. Fahrzeug nach einem der vorhergehenden Ansprüche, **dadurch gekennzeichnet, dass** es ein Netzanschlussteil (P) umfasst, das einen externen Stromausgang zum Zuführen von Strom von einer externen Stromquelle zu mindestens dem Elektromotor (5) umfasst.

## Revendications

1. Véhicule industriel, comprenant un moteur à combustion interne (2); un moteur électrique (5); une machine électrique réversible (3); au moins un essieu d'entraînement (6; 7); et un train d'engrenages épicycloïdal (4) qui est connecté audit moteur à combustion interne (2), audit moteur électrique (5) et audit au moins un essieu d'entraînement (6; 7); dans lequel ledit moteur électrique (5) entraîne un engrenage couronne dudit train d'engrenages épicycloïdal, et ledit au moins un essieu d'entraînement (6; 7) est entraîné par un support dudit train d'engrenages épicycloïdal; le véhicule étant **caractérisé en ce que** ledit moteur à combustion interne (2) entraîne ladite machine électrique réversible (3) et un engrenage soleil dudit train d'engrenages épicycloïdal en parallèle, de telle sorte que la puissance maximum qui est transférée audit au moins un essieu d'entraînement (6; 7) soit la somme de la puissance d'entraînement de véhicule maximum absolue dudit moteur à combustion interne (2) et dudit moteur électrique (5); et **en ce qu'**il comprend un premier embrayage (12) pour déconnecter ledit moteur à combustion interne (2) dudit engrenage soleil; une pompe hydraulique (8); et au moins un actionneur hydraulique (9) qui est connecté à ladite pompe hydraulique (8); ladite pompe hydraulique (8) étant connectée pour transfert de puissance audit engrenage soleil en parallèle par rapport audit premier embrayage (12).

2. Véhicule selon la revendication 1, **caractérisé en ce qu'**il comprend un synchroniseur (13) pour connecter ledit engrenage soleil audit moteur à combustion interne (2) pendant que ledit moteur à combustion interne (2) tourne; et un frein (19) pour bloquer ledit engrenage soleil.

3. Véhicule selon la revendication 2, **caractérisé en ce que** ledit synchroniseur (13) est conçu de manière à connecter un premier arbre (14), provenant dudit premier embrayage (12), à un deuxième arbre (15), qui est connecté audit engrenage soleil, lorsque les vitesses angulaires desdits premier et deuxième arbres (14, 15) sont sensiblement les mêmes.

4. Véhicule selon l'une quelconque des revendications précédentes, **caractérisé en ce qu'**il comprend un deuxième embrayage (20) pour déconnecter ladite pompe hydraulique (8) dudit engrenage soleil.

5. Véhicule selon l'une quelconque des revendications 2 à 4, **caractérisé en ce qu'**il comprend une unité de commande (11) pour commander l'entraînement dudit véhicule par ledit moteur électrique (5), et pour commander la connexion dudit train d'engrenages épicycloïdal (4) audit moteur à combustion interne (2) par ledit synchroniseur (13) lorsque la demande de puissance et/ou de vitesse de l'utilisateur dépasse un seuil prédéterminé donné.

6. Véhicule selon l'une quelconque des revendications précédentes, **caractérisé en ce que** ledit moteur électrique (5) est également une machine électrique réversible.

7. Véhicule selon l'une quelconque des revendications précédentes, **caractérisé en ce qu'**il comprend une batterie d'alimentation électrique (16) qui est connectée de façon fonctionnelle aux actionneurs (I) dudit moteur électrique (5) et de ladite machine électrique réversible (3).

8. Véhicule selon l'une quelconque des revendications précédentes, **caractérisé en ce qu'**il comprend une unité de commande de puissance (21) pour commander la charge de la batterie d'alimentation électrique (16).

9. Véhicule selon l'une quelconque des revendications précédentes, **caractérisé en ce qu'**il comprend une alimentation électrique (P) comprenant une sortie de courant externe pour alimenter au moins ledit moteur électrique (5) à partir d'une source d'alimentation électrique externe.
